(19) **Europäisches Patentamt / European Patent Office / Office européen des brevets**

(11) **EP 1 151 576 B1**

(12) **FASCICULE DE BREVET EUROPEEN**

(45) Date de publication et mention
de la délivrance du brevet:
**07.03.2007 Bulletin 2007/10**

(21) Numéro de dépôt: **99973617.6**

(22) Date de dépôt: **25.11.1999**

(51) Int Cl.:
***H04L 9/30*** (2006.01)

(86) Numéro de dépôt international:
**PCT/FR1999/002918**

(87) Numéro de publication internationale:
**WO 2000/042734 (20.07.2000 Gazette 2000/29)**

(54) **PROCEDE CRYPTOGRAPHIQUE A CLES PUBLIQUE ET PRIVEE**

KRYPTOGRAPHISCHES VERFAHREN UNTER VERWENDUNG EINES ÖFFENTLICHEN UND EINES PRIVATEN SCHLÜSSELS

PUBLIC AND PRIVATE KEY CRYPTOGRAPHIC METHOD

(84) Etats contractants désignés:
**DE ES FR GB IT**

(30) Priorité: **14.01.1999 FR 9900341**

(43) Date de publication de la demande:
**07.11.2001 Bulletin 2001/45**

(73) Titulaire: **GEMPLUS**
**13881 Gémenos Cedex (FR)**

(72) Inventeur: **PAILLIER, Pascal**
**F-75020 Paris (FR)**

(56) Documents cités:
• **YASUKO GOTOH ET AL: "A METHOD FOR RAPID RSA KEY GENERATION" SYSTEMS & COMPUTERS IN JAPAN, vol. 21, no. 8, 1 janvier 1990 (1990-01-01), pages 11-20, XP000177817 ISSN: 0882-1666**

**Description**

La présente invention concerne un procédé cryptographique à clés publique et privée. Il est utilisable dans toutes les applications dans lesquelles il est nécessaire d'assurer la confidentialité des messages transmis sur un canal quelconque et/ou d'identifier avec certitude un dispositif avec lequel on échange des messages.

La confidentialité de messages transmis entre deux dispositifs A et B sur un canal de communication quelconque est obtenue en chiffrant l'information transmise pour la rendre inintelligible aux personnes à qui elle n'est pas destinée. L'identification certaine d'un dispositif est lui basé le calcul de la signature numérique d'un message.

En pratique, deux types de procédé cryptographique peuvent être utilisés celui dit symétrique, à clés secrètes, dont un exemple bien connu est le DES...celui dit asymétrique, utilisant une paire de clés publique et privée et décrit dans " *Public_key cryptosystem* " dans " *New directions in Cryptographie*" IEEE Transactions on Information Theory, nov. 1976, par MM Diffie et Hellman. Un exemple bien connu de procédé asymétrique est le RSA, du nom de ses inventeurs Ronald R̲ivest, Adi S̲hamir et Léonard A̲dleman. On peut trouver une description de ce procédé RSA dans le brevet américain US 4, 405, 829.

Dans l'invention, on s'intéresse plus particulièrement à un procédé cryptographique asymétrique.

Un procédé de chiffrement selon un procédé cryptographique asymétrique consiste principalement, pour un émetteur A qui veut envoyer confidentiellement un message à un destinataire B à prendre connaissance, par exemple dans un annuaire, de la clé publique $K_B$ du destinataire B, à appliquer dans le procédé de chiffrement E sur le message m. à transmettre, et à envoyer au destinataire B, le cryptogramme c résultant :

$$c = E_{K_B}(m).$$

Ce procédé consiste principalement pour le destinataire B, à recevoir le cryptogramme c, et à le déchiffrer pour obtenir le message d'origine m, en appliquant la clé privée K'b qu'il est le seul à connaître dans le procédé de déchiffrement D sur le cryptogramme c : $m = D_{X'_B}(c)$.

Selon ce procédé n'importe qui peut envoyer un message chiffré au destinataire B, mais seul ce dernier est capable de le déchiffrer.

On utilise habituellement un procédé cryptographique asymétrique pour la génération/vérification de signature. Dans ce contexte, un utilisateur qui veut prouver son identité utilise une clé privée, connue de lui seul, pour produire une signature numérique s d'un message m, signature qu'il transmet au dispositif destinataire. Ce dernier met en oeuvre la vérification de la signature en utilisant la clé publique de l'utilisateur. Tout dispositif a ainsi la capacité de vérifier la signature d'un utilisateur, en prenant connaissance de la clé publique de cet utilisateur et en l'appliquant dans l'algorithme de vérification. Mais seul l'utilisateur concerné a la capacité de générer la bonne signature utilisant sa clé privée. Ce procédé est par exemple beaucoup utilisé dans les systèmes de contrôle d'accès ou de transactions bancaires. Il est en général couplé à l'utilisation d'un procédé de chiffrement, pour chiffrer la signature avant de la transmettre.

Pour cette génération/vérification de signatures numériques, on peut utiliser en pratique des procédés cryptographiques asymétriques dédiés à cette application, tel le DSA *(Digital Signature Algorithm),* qui correspond à un standard américain proposé par le *US National Institute of Standards and Technology.* On peut en outre utiliser le RSA qui a la propriété de pouvoir être utilisé aussi bien en chiffrement qu'en génération de signature.

Dans l'invention, on s'intéresse à un procédé cryptographique qui puisse être utilisé pour le chiffrement des messages et pour la génération de signature numérique. Dans l'état actuel de la technique, seul le RSA, dont il existe de nombreuses variantes de mise en oeuvre, offre cette double fonctionnalité.

Le RSA comprend une étape de génération des clés publique K et privée K' pour un dispositif donné dans laquelle on procède de la façon suivante :

on choisit deux grands nombres premiers p et q, distincts.

- on calcule leur produit n=p.q.
- on choisit un nombre c premier avec le plus petit commun multiple de (p-1)(q-1). En pratique, e est souvent pris égal à 3.

La clé publique K est alors formée par le couple de paramètres (n,e) et la clé secrète K' est formée par le couple de paramètres (p,q).

En choisissant p et q de grande taille, leur produit n est aussi de grande taille, n est donc très difficile à factoriser : on est assuré que l'on ne pourra pas retrouver la clé secrète K'=(p,q) à partir de la connaissance de n .

Le procédé de chiffrement d'un nombre m représentant un message M, $0 \leq m < n$ consiste alors, à effectuer le

calcul suivant :

$$c = EB(m) = m^e \bmod n$$

au moyen de la clé publique K=(n,e).

(Voir par exemple le document D1 : Yasuko Gotoh et al. "A method for rapid rsa key generation", Systems & Computers in Japan, vol. 21, no 8, 1 janvier 1990, pages 11-20, XP000177817, ISSN 0882-1666).

Le procédé de déchiffrement consiste lui dans le calcul inverse suivant :

m=c$^d$mod(n)

au moyen de la clé privée K'=(p,q), gardée secrète, où

$$d = \frac{1}{e} \bmod (p-1)(q-1).$$

On a vu que le RSA a la particularité d'être utilisable pour la vérification de signature. Le procédé correspondant de génération de signature par un utilisateur A consiste à utiliser le procédé de déchiffrement avec la clé secrète pour produire la signature s d'un nombre m représentatif d'un message. On a ainsi : s=m$^d$mod n.

Cette signature s est transmise à un destinataire B.Ce dernier, qui connaît m (par exemple, A transmet s et m), vérifie la signature en effectuant l'opération inverse, c'est à dire en utilisant le procédé de chiffrement avec la clé publique de l'émetteur A. C'est à dire qu'il calcule v=s$^e$mod n, et vérifie v=m.

En général, pour améliorer la sécurité d'un tel procédé de vérification de signature, on applique préalablement une fonction de hachage sur le nombre m avant de calculer la signature, qui peut consister en des permutations de bits et/ou une compression.

Quand on parle de message M à chiffrer ou à signer, il s'agit bien sûr de messages numériques, qui peuvent résulter d'un codage numérique préalable. Ce sont en pratique des chaînes de bits, dont la taille binaire (nombre de bits) peut être variable.

Or un procédé de cryptographie comme le RSA est tel qu'il permet de chiffrer avec la clé publique (n,e) n'importe quel nombre entre 0 et n-1. Pour l'appliquer à un message M de taille quelconque, il faut donc en pratique couper ce message en une suite de nombres m qui vérifieront chacun la condition 0≤m<n. On applique alors le procédé de chiffrement sur chacun de ces nombres. Dans la suite, on s'intéresse donc à l'application du procédé cryptographique sur un nombre m représentatif du message M. m peut-être égal à M, ou en n'être qu'une partie. On désigne alors indifféremment dans la suite par m le message ou un nombre représentatif du message.

Un objet de l'invention, est un procédé de cryptographie asymétrique différent de ceux basés sur le RSA.

Un objet de l'invention, est un procédé reposant sur d'autres propriétés, qui puisse s'appliquer aussi bien en chiffrement de messages qu'en génération de signatures.

Un objet de l'invention, est un procédé de cryptographique qui permette, dans certaines configurations, un temps de traitement plus rapide.

Telle que caractérisée, l'invention concerne un procédé cryptographique selon la revendication 1.

L'invention sera mieux comprise à la lecture de la description suivante , faite à titre indicatif et nullement limitatif de l'invention et en référence aux dessins annexés dans lesquels :

- la figure 1 est un schéma fonctionnel d'un système de communication cryptographique de type asymétrique;
- la figure 2 est un schéma fonctionnel d'un dispositif communiquant utilisé dans un système de communication cryptographique selon l'invention;
- la figure 3 est un organigramme d'une session de chiffrement/déchiffrement de messages utilisant le procédé cryptographique selon l'invention; et
- la figure 4 est un organigramme d'une session de génération/vérification de signature utilisant le procédé cryptographique selon l'invention.

Pour bien comprendre l'invention, il est nécessaire de faire quelques préliminaires mathématiques.

Dans la description, on utilise les notations mathématiques suivantes :

(1) Si a est un entier relatif et b un entier strictement positif, a mod b (a modulo b) est le résidu modulaire de a relativement à b et désigne l'unique entier strictement inférieur à b tel que b divise (a - a mod b).

(2) $(Z/bZ)$ désigne l'ensemble des résidus modulo b et forme un groupe pour l'addition modulaire.

(3) $(Z/bZ)^*$ désigne l'ensemble des entiers inversibles modulo b et forme un groupe pour la multiplication modulaire.

(4) L'ordre d'un élément a de $(Z/bZ)^*$ est le plus petit entier naturel ord(a,b) tel que $a^{ord(a,b)}=1$ mod b.

(5) PPCM (a,b) désigne le plus petit commun multiple de a et b.

(6)PGCD(a,b) désigne le plus grand commun diviseur de a et b.

(7) $\lambda(a)$ désigne l'indicateur d'Euler de a. Si a=p.q, $\lambda(a)$=PPCM(p-1,q-1).

(8) On note $x=TRC(a_1,...a_k, b_1,...b_k)$ l'unique solution, obtenue par la mise en oeuvre du Théorème du Reste Chinois bien connu, du système d'équations modulaires suivant :

$$x=a_1 \text{ mod } b_1$$
$$x= a_2 \text{ mod } b_2$$
$$x= a_k \text{ mod } b_k.$$

où les entiers $a_i$ et $b_i$ sont donnés et où, $\forall i,j$ avec $i \neq j$, PGCD(bi, bj)=1.

(9) On rappelle que la taille binaire d'un nombre a est le nombre de bits sur lesquels a s'écrit.

Soit maintenant un nombre n, entier, de taille arbitraire. L'ensemble $Un=\{x<n^2 /x=1 \text{ mod } n\}$ est un sous-groupe multiplicatif de $(Z/n^2Z)^*$.

Soit alors $\log_n$ la fonction définie sur l'ensemble Un par :

$$\log_n(x)= \frac{x-1}{n}$$

Cette fonction a la propriété suivante :

$$\forall x \in Un, \forall y \in Un, \log_n(xy \text{ mod } n^2)= \log_n(x) + \log_n(y) \text{ mod } n.$$

Par conséquent, si g est un nombre entier arbitraire appartenant à Un, on a pour tout nombre m, $0 \leq m < n$ :

$$\log_n(g^m \text{ mod } n^2)=m.\log_n(g) \text{ mod } n^2.$$

Cette propriété mathématique est à la base du procédé de cryptographie mis en oeuvre dans l'invention qui va maintenant être décrite.

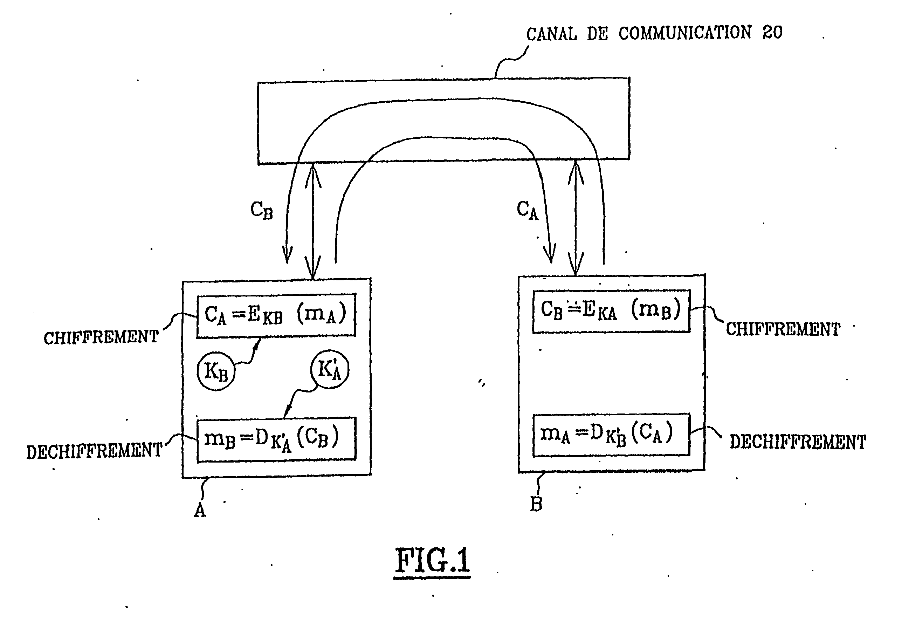

La figure 1 représente un système de communication cryptographique, utilisant un procédé cryptographique asymétrique. Il comprend des dispositifs communiquants, dans l'exemple A et B, sur un canal de communication. Dans l'exemple, on a représenté un canal bidirectionnel. Chaque dispositif contient une paire de clés publique K et privée K'.

Les clés publiques sont par exemple publiées dans un fichier public tel qu'un annuaire, que chaque dispositif peut consulter. Dans ce fichier public, on trouvera ainsi la clé publique $K_A$ du dispositif A et celle $K_B$ du dispositif B. La clé privée K' de chaque dispositif est conservée par lui de façon secrète, typiquement dans une zone sécurisée de mémoire non volatile. Le dispositif A contient ainsi en mémoire secrète sa clé privée $K'_A$ et le dispositif B contient ainsi en mémoire secrète sa clé privée $K'_B$. Ils conservent aussi leur clé publique, mais dans une zone mémoire sans protection d'accès particulière.

Dans un tel système, le dispositif A peut chiffrer un message m en un cryptogramme $c_A$ en utilisant la clé publique $K_B$ du dispositif B; ce dernier peut déchiffrer $c_A$ en utilisant sa clé privée $K'_B$, qu'il conserve secrètement. Inversement, le dispositif B peut chiffrer un message m en un cryptogramme $c_B$ en utilisant la clé publique $K_A$ du dispositif A; ce dernier peut déchiffrer $c_B$ en utilisant sa clé privée $K'_A$, qu'il conserve secrètement.

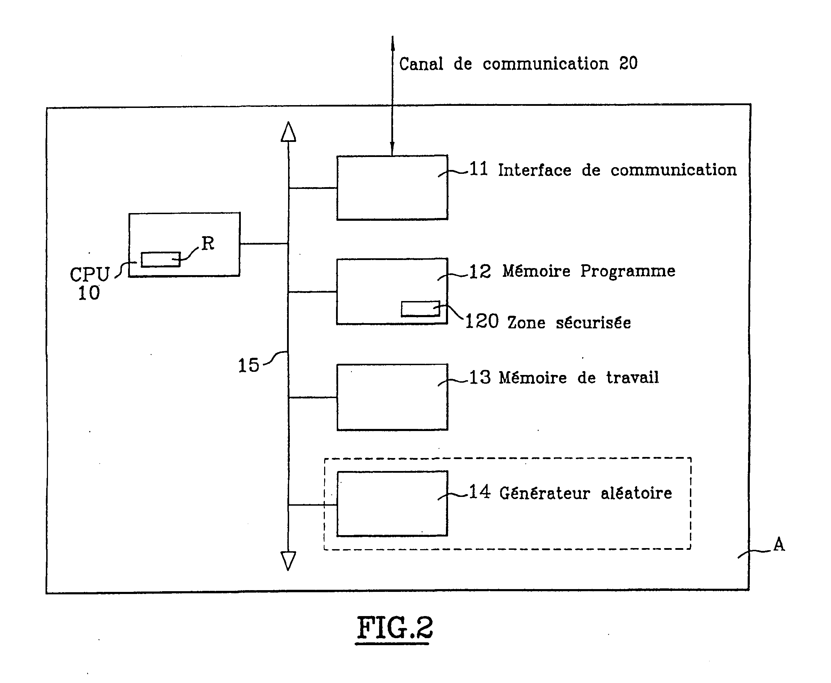

Typiquement, chaque dispositif comprend au moins, comme représenté sur la figure 2, des moyens de traitement 10, c'est à dire une unité centrale de traitement (CPU), comprenant notamment différents registres R pour le calcul, une interface de communication 11 avec le canal de communication, et des moyens de mémorisation. Ces moyens de mémorisation comprennent généralement une mémoire programme 12 (ROM, EPROM, EEPROM) et une mémoire de travail (RAM) 13 . En pratique, chaque dispositif conserve ses données secrètes dans une zone d'accès sécurisée 120 prévue en mémoire programme et ses données publiques dans une zone d'accès normal de cette mémoire. La mémoire de travail permet de conserver momentanément, le temps nécessaire aux calculs, des messages à chiffrer, des cryptogrammes à déchiffrer, ou encore des résultats de calculs intermédiaires.

Les moyens de traitement et de mémorisation permettent ainsi d'exécuter des programmes liés à l'application, et notamment d'effectuer les calculs correspondant à la mise en oeuvre du procédé de cryptographie pour le chiffrement /déchiffrement de messages et/ou la génération/vérification de signatures selon l'invention. Ces calculs comprennent notamment, comme on le verra de façon détaillée dans la suite, des élévations à la puissance, des résidus et inversions modulaires.

Les dispositifs peuvent encore comprendre un générateur 14 de nombre aléatoire ou pseudo-aléatoire r , qui peut intervenir dans les calculs précités, dans certaines variantes de réalisation. Ce générateur est encadré en pointillé sur la figure 2, pour indiquer qu'il n'est pas nécessaire à la réalisation de toutes les variantes de réalisation selon l'invention.

Tous ces moyens du dispositif sont connectés à un bus d'adresses et de données 15.

De tels dispositifs utilisés dans l'invention sont bien connus, et correspondent par exemple à ceux qui sont utilisés dans les systèmes de communication cryptographique de l'état de la technique, mettant en oeuvre le RSA. Ils ne seront donc pas détaillés plus avant. Un exemple pratique de système de communication cryptographique, est le système formé des serveurs bancaires et des cartes à puce, pour la gestion de transactions financières. Mais il existe de nombreuses autres applications, telle les applications liées au commerce électronique.

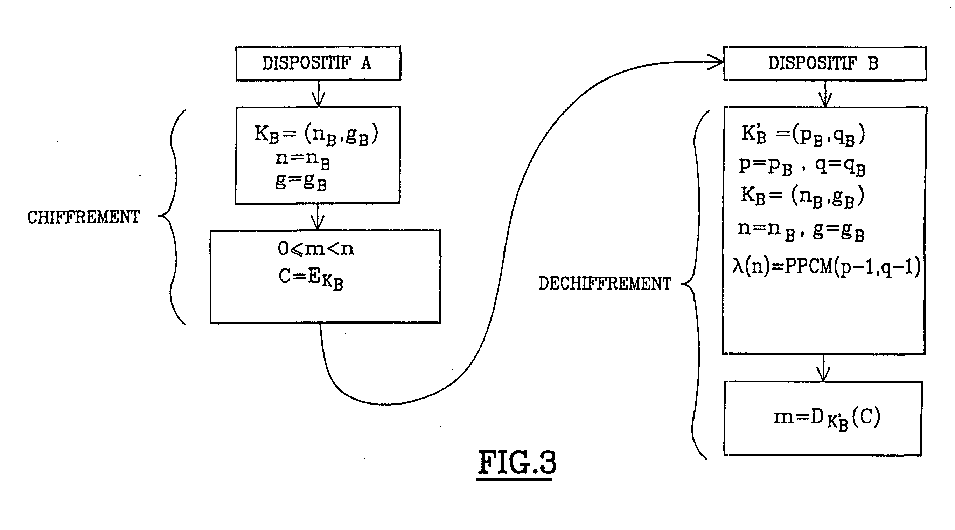

Un premier mode de réalisation de l'invention va maintenant être détaillé, au regard de l'organigramme représenté sur la figure 3.

Cet organigramme représente une séquence de communication entre un dispositif A et un dispositif B sur un canal de communication 20. Ces dispositifs comprennent au moins les moyens de traitement, de mémorisation et de communication décrits en relation avec la figure 2.

Le procédé de cryptographie selon l'invention comprend un procédé de générations des clés publique K et privée K'.

Selon l'invention, ce procédé de génération des clés publique et privée d'un dispositif comprend les étapes suivantes qui sont déjà connues dans le document de YASUKO GOTOH et al publié en Janvier 1990 au JAPON, sous les références XP000177817, ISSN : 0882-1666, vol. 21 n° 8 - pages 11-20 de « a method for rapid RSA Key génération » de l'ouvrage « Systems & Computers »:

- sélection de deux grands nombres premiers p et q distincts et de taille voisine;
- calcul du nombre n égal au produit p.q;
- calcul du nombre $\lambda(n)$=PPCM(p-1 , q-1), c'est à dire de la fonction de Carmichael du nombre n;
- détermination d'un nombre g, $0 \leq g < n^2$, qui remplisse les deux conditions suivantes :

    a) g est inversible modulo $n^2$ et
    b) ord(g,$n^2$)=1 mod n.

Cette condition b) indique que l'ordre du nombre g dans l'ensemble $(Z/n^2Z)^*$ des nombres entiers de 0 à $n^2$ est un multiple non nul du nombre n, selon les notations définies plus haut.

La clé publique K est alors formée par le nombre n et le nombre g. La clé privée est formée par les nombres p,q et $\lambda(n)$ ou seulement par les nombres p et q, $\lambda(n)$ pouvant être recalculé à chaque utilisation de la clé secrète.

On génère selon ce procédé les clés publique et privée de chaque dispositif. Cette génération peut-être effectuée, selon les dispositifs considérés et les applications, par les dispositifs eux-mêmes ou par un organe externe.

Chaque dispositif, par exemple le dispositif A, contient donc en mémoire sa clé publique $K_A =(n_A,g_A)$ et, de façon secrète, sa clé privée $K'_A=(p_A,q_A)$.

En outre, les clés publiques sont mises dans un fichier accessible au public.

Selon l'invention, on verra ci-dessous qu'elle consiste à donner une valeur particulière à g. En effet, il est avantageux de choisir g=2, lorsque c'est possible, c'est à dire, lorsque g=2 remplit les conditions a) et b) du procédé de génération de signature selon l'invention.

Un procédé de chiffrement selon un premier mode de réalisation du procédé cryptographique de l'invention mis en oeuvre dans le dispositif A consiste alors, pour l'envoi d'un message au dispositif B, dans la réalisation des étapes suivantes, avec $0 \leq m < n$:

- renseignement des paramètres n et g du procédé de chiffrement mis en oeuvre par le dispositif A par la clé publique $K_B$ du deuxième dispositif B : n =$n_B$, g=$g_B$.
- calcul du cryptogramme c =$g^m{}_{mod}$ $n^2$, et
- transmission du cryptogramme c sur le canal de communication.

Le procédé de chiffrement selon un premier mode de réalisation de l'invention consiste donc à prendre le paramètre g de la clé publique, à l'élever à la puissance m, et à calculer le résidu modulaire relativement à $n^2$. On notera que dans le RSA, c'est le message m qui est élevé à la puissance alors que dans l'invention, le message m est utilisé comme exposant.

Le dispositif B qui reçoit le message chiffré, c'est à dire le cryptogramme c, met alors en oeuvre un procédé de déchiffrement selon l'invention avec les paramètres de sa clé privée. Ce procédé de déchiffrement comprend le calcul suivant :

- calcul du nombre m tel que

$$m = \frac{\log_n(c^{\lambda(n)} \bmod n^2)}{\log_n(g^{\lambda(n)} \bmod n^2)} \bmod n$$

où

$$\log_n(x) = \frac{x-1}{n}$$

Si g=2, on voit que le calcul d'élévation de g à la puissance est facilité. On prendra donc de préférence g=2, toutes les fois où ce sera possible. En d'autres termes, le procédé de génération des clés commencera par essayer si g=2 remplit les conditions a) et b).

Différentes variantes de calcul du procédé de déchiffrement peuvent être mises en oeuvre, qui permettent, lorsque le dispositif doit déchiffrer un grand nombre de cryptogrammes, de précalculer certaines quantités et de les conserver de façon secrète dans le dispositif. Une contrepartie est que la zone mémoire secrète (zone 120 sur la figure 2) du dispositif doit -être plus étendue, puisqu'elle doit alors contenir alors des paramètres supplémentaires en plus des paramètres p et q. Ceci n'est pas sans influencer le choix de mise en eouvre d'une variante ou d'une autre. En effet, la réalisation d'une zone de mémoire sécurisée est coûteuse, et donc de capacité (mémoire) généralement limitée, notamment dans les dispositifs dits à bas coûts (par exemple, certains types de cartes à puce).

Dans une première variante de mise en oeuvre du procédé de déchiffrement, on prévoit que le dispositif, B en l'occurrence, précalcule une fois pour toutes la quantité :

$$\alpha_{n,g} = \log_n(g^{\lambda(n)} \bmod n^2)^{-1} \bmod n$$

et la conserve secrète en mémoire.

Ainsi, on réduit d'autant le temps nécessaire au déchiffrement de chacun des messages reçus par le dispositif. En effet, lorsque que le dispositif B exécute une instance de cette variante du procédé de déchiffrement, il ne lui reste plus qu'à calculer :

$$m = \log_n(c^{\lambda(n)} \bmod n^2) \, \alpha_{n,g} \bmod n.$$

Dans une deuxième variante de mise en oeuvre du procédé de déchiffrement selon l'invention, on prévoit d'utiliser le Théorème du Reste Chinois, pour une meilleure efficacité (rapidité du calcul).

Dans une instance de cette deuxième variante du procédé de déchiffrement, le dispositif effectue les calculs (de déchiffrement) suivants :

$$1 \quad m_p = \log_p(c^{p-1} \bmod p^2)\log_p(g^{p-1} \bmod p^2)^{-1} \bmod p$$

$$2 \quad m_q = \log_q(c^{q-1} \bmod q^2)\log_p(g^{q-1} \bmod q^2)^{-1} \bmod q$$

$$3 \quad m = TRC(m_p, m_q, p, q),$$

où

$$\log_p(x) = (x-1)/p \text{ et } \log_q(x) = (x-1)/q$$

Dans ce cas, on peut en outre prévoir, dans les cas où le dispositif est amené à déchiffrer un très grand nombre de messages, que le dispositif précalcule une fois pour toutes les quantités suivantes :

$$\alpha_{p,g} = \log_p(g^{p-1} \bmod p^2)^{-1} \bmod p$$

et

$$\alpha_{q,g} = \log_q(g^{q-1} \bmod q^2)^{-1} \bmod q.$$

Le dispositif doit alors conserver ces quantités comme données secrètes.
Le calcul effectué lors d'une instance du procédé de déchiffrement devient :

$$1. \quad m_p = \log_p(c^{p-1} \bmod p^2)\, \alpha_{p,g} \bmod p$$

$$2. \quad m_q = \log_q(c^{q-1} \bmod q^2)\, \alpha_{q,g} \bmod q$$

$$3. \quad m = TRC(m_p, m_q, p, q).$$

Comme déjà précisé, toutes ses variantes de calcul de déchiffrement sont intéressantes lorsque le dispositif est amené à déchiffrer un très grand nombre de messages, et que le gain en temps de traitement compense la plus grande capacité mémoire de la zone sécurisée pour conserver toutes les données secrètes. Le choix de l'une ou l'autre variante dépend en pratique de l'application considérée et des contraintes de coûts et de temps de traitement à concilier.
Un deuxième mode de réalisation de l'invention comprend l'utilisation d'un nombre aléatoire, fournit par un générateur de nombre aléatoire (ou pseudo-aléatoire), dans le procédé de chiffrement, en sorte que pour un même message m à transmettre, le cryptogramme calculé c sera différent à chaque fois. La sécurité du système de communication est donc plus grande. Le procédé de déchiffrement est inchangé.
Ce deuxième mode de réalisation de l'invention comprend deux variantes.
Dans une première variante, le cryptogramme c est obtenu par le calcul suivant : $c = g^{m+nr} \bmod n^2$.
Dans une deuxième variante, le cryptogramme c est obtenu par le calcul suivant : $c = g^m r^n \bmod n^2$
Cette deuxième variante nécessite en pratique un temps de traitement plus long que la première, mais elle offre une plus grande sécurité.
Dans un troisième mode de réalisation de l'invention, on impose que l'ordre de g dans $(Z/nZ)^*$ soit un entier de petite taille, ceci étant obtenu par une mise en oeuvre du procédé de génération des clés différente.
Avec une telle condition sur l'ordre du paramètre g, on réduit la complexité du calcul du procédé de déchiffrement qui devient en pratique quadratique (fonction de $n^2$) par rapport à la taille du nombre n.

Dans ce troisième mode de réalisation de l'invention, le procédé de génération des clés publique et privée est alors le suivant :

- sélection en secret, d'un entier u et de deux grands nombres premiers p et q distincts et de taille voisine tels que u divise (p-1) et divise (q-1).
- calcul du nombre n égal au produit p.q;
- calcul du nombre $\lambda(n)$=PPCM(p-1, q-1), c'est à dire de l'indicateur de Carmichael du nombre n;
- détermination d'un nombre h, $0 \leq h < n^2$, qui remplisse les deux conditions suivantes :

    a) h est inversible modulo $n^2$ et
    b) ord($h,n^2$)=0 mod n.

- calcul du nombre g= $h^{\lambda(n)/u}$ mod $n^2$.

La clé publique K est alors formée par le nombre n et le nombre g. La clé privée est constituée par les entiers (p,q,u) conservés secrètement dans le dispositif.

De préférence, on choisit h=2, lorsque c'est possible (c'est à dire si h=2 remplit les conditions a) et b), pour faciliter le calcul de g).

On notera que si u =PGCD(p-1,q-1), il n'est pas nécessaire de conserver ce nombre qui peut-être retrouvé par le dispositif à partir de p et q

De préférence, on choisira u premier, pour améliorer la sécurité du procédé, et de petite taille, typiquement 160 bits. En choisissant une petite taille pour u, on verra que l'on facilite le calcul de déchiffrement.

Dans ce troisième mode de réalisation, la mise en oeuvre du procédé de chiffrement pour chiffrer un message m est identique à celle précédemment décrite dans le premier mode de réalisation de l'invention, le cryptogramme étant égal à c = $g^m$ mod $n^2$.

On peut aussi calculer le cryptogramme c en utilisant une variable aléatoire r selon la première variante du deuxième mode de réalisation de l'invention précédemment décrit. r est alors un entier aléatoire, de même taille que u et le cryptogramme est obtenu par le calcul suivant : c=$g^{m+nr}$ mod $n^2$.

Le cryptogramme c calculé selon l'une ou l'autre mise en oeuvre précédente du procédé de chiffrement est envoyé au dispositif B qui doit le déchiffrer. La mise en oeuvre du procédé de déchiffrement par le dispositif B qui reçoit le message est un peu différente.

En effet, le calcul effectué dans le dispositif dans une instance de déchiffrement, pour retrouver le nombre m à partir du cryptogramme c devient le suivant :

$$m = \frac{\log_n(c^u \bmod n^2)}{\log_n(g^u \bmod n^2)} \bmod n.$$

On peut appliquer comme précédemment des variantes de calcul qui permettent d'accélérer le temps de traitement nécessaire.

Dans une première variante, on va ainsi précalculer une fois pour toutes la quantité :

$$\beta_{n,g} = \log_n(g^u \bmod n^2)^{-1} \bmod n$$

et la conserver secrètement en mémoire.

Lors d'une instance de déchiffrement d'un cryptogramme c reçu, le dispositif n'a plus qu'à effectuer le calcul suivant :

$$m = \log(c^u \bmod n^2) \cdot \beta_{n,g} \bmod n.$$

Dans une deuxième variante, on met en oeuvre le Théorème du Reste Chinois, en utilisant les fonctions $\log_p$

et $\log_q$ déjà vues pour effectuer le calcul de déchiffrement.

Lors d'une instance de cette variante du procédé de déchiffrement du cryptogramme c reçu, le dispositif effectue alors les calculs suivants :

$$1.\ m_p = \log_p(c^u \bmod p^2) \log_p(g^u \bmod p^2)^{-1} \bmod p$$

$$2.\ m_q = \log_q(c^u \bmod q^2) \log_q(g^u \bmod q^2)^{-1} \bmod q$$

$$3.\ m = TRC(m_p, m_q, p, q).$$

Dans une troisième variante, on accélère encore le temps de traitement nécessaire au déchiffrement du cryptogramme c selon la deuxième variante, en précalculant les quantités suivantes :

$$\beta_{p,g} = \log(g^u \bmod p^2)^{-1} \bmod p$$

$$\beta_{q,g} = \log(g^u \bmod q^2)^{-1} \bmod q$$

et en les conservant de façon secrète dans le dispositif.

Lors d'une instance de calcul de cette troisième variante du procédé de déchiffrement du cryptogramme c reçu, le dispositif n'a alors plus qu'à effectuer les calculs suivants :

$$1.\ m_p = \log_p(c^u \bmod p^2)\ \beta_{p,g} \bmod p$$

$$2.\ m_q = \log_q(c^u \bmod q^2)\ \beta_{q,g} \bmod q$$

$$3.\ m = TRC(m_p, m_q, p, q).$$

Dans un quatrième mode de réalisation de l'invention, le procédé de chiffrement et le procédé de déchiffrement sont tels qu'ils présentent la particularité d'être des permutations sur le groupe des entiers modulo $n^2$. En d'autres termes, si le message m s'exprime sur k bits, le cryptogramme c obtenu en appliquant le procédé de chiffrement sur m et la signature s obtenue en appliquant le procédé de déchiffrement sur m sont aussi sur k bits.

Cette particularité confère au procédé cryptographique la propriété supplémentaire de pouvoir être utilisé aussi bien en chiffrement/déchiffrement qu'en génération/vérification de signature. Dans ce cas, le procédé de déchiffrement est employé comme procédé de génération de signature et le procédé de chiffrement comme procédé de vérification de signature.

Dans ce quatrième mode de réalisation, le procédé de génération des clés publique et privée est le même que celui du premier mode de réalisation de l'invention : K=(n,g) et K'=(p,q,λ(n)) ou K'=(p,q).

Si le dispositif A veut envoyer un message m chiffré au dispositif B, il se procure la clé publique (n,g) de ce dernier, puis dans une instance du procédé de chiffrement, effectue alors les calculs suivants, appliqué au nombre m, $0 \leq m < n^2$ :

$$1.\ m_1 = m \bmod n$$

$$2.\ m_2 = (m - m1)/n \qquad (division\ euclidienne)$$

$$3. \quad c = g^{m_1} \, m_2^{\,n} \bmod n^2.$$

C'est ce cryptogramme c qui est envoyé au dispositif B.

Ce dernier doit donc lui appliquer le procédé de déchiffrement correspondant, pour retrouver $m_1$, $m_2$ et finalement m. Ce procédé de déchiffrement selon le quatrième mode de réalisation de l'invention consiste à effectuer les calculs suivants :

$$1. \quad m_1 = \log_n(c^{\lambda(n)} \bmod n^2).\log_n(g^{\lambda(n)} \bmod n^2)^{-1} \bmod n.$$

$$2. \quad w = c g^{-m_1} \bmod n.$$

$$3. \quad m_2 = w^{1/n \bmod \lambda(n)} \bmod n.$$

$$4. \quad m = m_1 + n m_2.$$

Comme précédemment, des variantes du procédé de déchiffrement selon ce quatrième mode de réalisation de l'invention sont applicables, qui permettent de réduire le temps de traitement nécessaire pour déchiffrer un message donné. Elles sont intéressantes lorsque le dispositif a un grand nombre de cryptogrammes à déchiffrer.

Une première variante consiste à précalculer les quantités suivantes :

$$\alpha_{n,g} = \log_n(g^{\lambda(n)} \bmod n^2)^{-1} \bmod n$$

et

$$\gamma_n = 1/n \bmod \lambda(n)$$

que le dispositif B calcule une fois pour toutes et conserve secrètes en mémoire.

A chaque nouvelle instance de déchiffrement d'un cryptogramme c reçu selon cette première variante, le dispositif B n'a plus qu'à effectuer les calculs suivants :

$$1. \quad m_1 = \log_n(c^{\lambda(n)} \bmod n^2) \, \alpha_{n,g} \bmod n.$$

$$2. \quad w = c g^{-m_1} \bmod n.$$

$$3. \quad m_2 = w^{\gamma_n} \bmod n.$$

$$4. \quad m = m_1 + n m_2.$$

Dans une deuxième variante de la mise en oeuvre du procédé de déchiffrement selon le quatrième mode de réalisation, on utilise le Théorème du Reste Chinois.

Le dispositif qui veut déchiffrer un cryptogramme c selon cette deuxième varainte effectue alors les calculs successifs suivants :

$$1.\ m_{1,p}=\log_p(c^{p-1}\bmod p^2)\log_p(g^{p-1}\bmod p^2)^{-1}\bmod p$$

$$2.\ w_p=cg^{-m_{1,p}}\bmod p$$

$$3.\ m_{2,p}=w_p^{\ 1/q\ \bmod\ p-1}\bmod p$$

$$4.\ m_{1,q}=\log_q(c^{q-1}\bmod q^2)\log_q(g^{q-1}\bmod q^2)^{-1}\bmod q$$

$$5.\ w_q=cg^{-m_{1,q}}\bmod q$$

$$6.\ m_{2,q}=w_q^{\ 1/p\ \bmod\ q-1}\bmod q$$

$$7.\ m_1=TRC(m_{1,p},m_{2,p},p,q).$$

$$8.\ m2=TRC(m_{1,q},m_{2,q},p,q).$$

$$9.\ m\ =\ m_1\ +\ pqm_2.$$

Dans une troisième variante, pour améliorer encore le temps de traitement du déchiffrement de cette deuxième variante, le dispositif B peut précalculer une fois pour toutes les quantités suivantes :

$$\alpha_{p,g}=\log_p(g^{p-1}\bmod p^2)^{-1}\bmod p$$

$$\alpha_{q,g}=\log_q(g^{q-1}\bmod q^2)^{-1}\bmod q$$

$$\gamma_p=\ 1/q\ \bmod\ p-1$$

$$\gamma_q=\ 1/p\ \bmod\ q-1$$

et les conserver secrètes en mémoire.
Le dispositif qui veut déchiffrer un cryptogramme c selon cette troisième variante n'a plus qu'à effectuer les calculs suivants:

$$1.\ m_{1,p}=\log_p(c^{p-1}\bmod p^2)\ \alpha_{p,g}\bmod p$$

$$2.\ w_p=cg^{-m_{1,p}}\bmod p$$

$$3. \quad m_{2,p} = w_p^{\gamma_p} \bmod p$$

$$4. \quad m_{1,q} = \log_q(c^{q-1} \bmod q^2) \, \alpha_{q,g} \bmod q$$

$$5. \quad w_q = cg^{-m_{1,q}} \bmod q$$

$$6. \quad m_{2,q} = w_q^{\gamma_q} \bmod q$$

$$7. \quad m_1 = TRC(m_{1,p}, m_{2,p}, p, q).$$

$$8. \quad m_2 = TRC(m_{1,q}, m_{2,q}, p, q).$$

$$9. \quad m = m_1 + pqm_2.$$

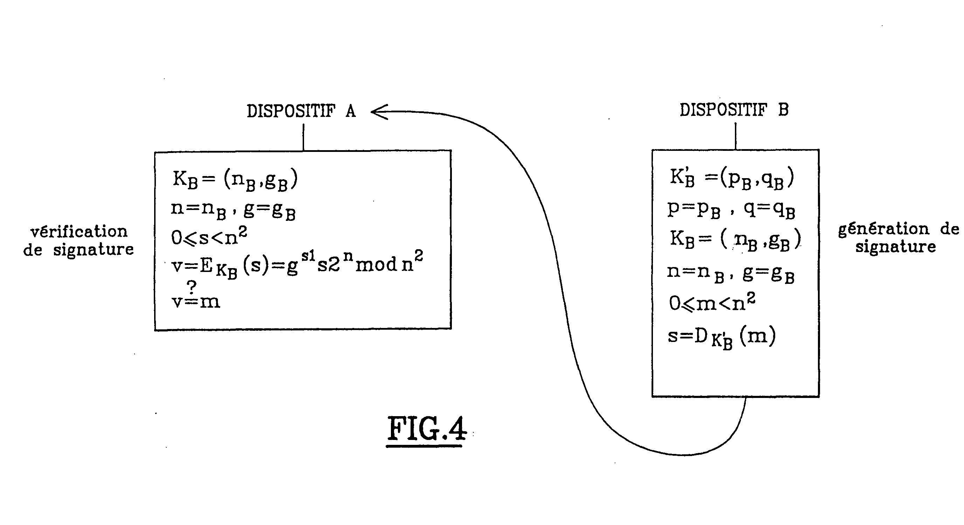

Le quatrième mode de réalisation de l'invention qui vient d'être décrit permet de faire de la génération/ vérification de signature. Comme représenté sur l'organigramme de la figure 4, si le dispositif B doit générer une signature s d'un nombre m représentatif d'un message vers le dispositif A, il applique comme procédé de génération de la signature, le procédé de déchiffrement avec sa clé privée : $s = D_{K.B}(m)$.

Le dispositif A qui reçoit la signature s et qui connaît le message m, vérifie que la signature est bonne en calculant la quantité v obtenue en appliquant le procédé de chiffrement sur la signature s avec la clé publique : $v = E_{KB}(s)$. Si la signature est bonne, on a $v = m$.

Toutes les variantes de mise en oeuvre du procédé de déchiffrement de ce quatrième mode de réalisation qui permettent d'accélérer le temps de traitement sont aussi bien applicable en génération/vérification de signature.

L'invention qui vient d'être décrite est applicable dans tous les systèmes où l'on veut pouvoir chiffrer et/ou signer des messages. Elle permet d'élargir les possibilités d'adaptation aux différentes applications, selon que l'on recherche plus de sécurité, ou une vitesse de traitement accrue. A cet égard, on notera que le troisième mode de réalisation de l'invention, dont la complexité de calcul est seulement quadratique (fonction de $n^2$) offre un réel avantage en terme de vitesse, dans la mesure où tous les procédés de l'état de la technique ont un ordre de complexité supérieur (fonction de $n^3$). Un tel avantage intéresse plus particulièrement toutes les applications utilisant des dispositifs portables, tels les cartes à puces et plus particulièrement les dispositifs à bas coûts.

Enfin, toute personne expérimentée dans la technique concernée par l'invention comprendra que des modifications dans la forme et/ou des détails peuvent être effectués. En particulier on peut chiffrer la signature, ou encore appliquer une fonction de hachage au message m avant de calculer sa signature. Cela permet notamment d'avoir une signature différente à chaque fois même si le message m est inchangé.

## Revendications

1. Procédé de chiffrement pour chiffrer un nombre m représentatif d'un message, avec $0 \le m < n$, **caractérisé en ce que** on calcule un cryptogramme $c = g^m \bmod n^2$, n et g étant des paramètres d'une clé publique.

2. Procédé de chiffrement selon la revendication 1, au cours duquel on calcule le cryptogramme $c = g^{m+nr} \bmod(n^2)$, r étant un nombre entier aléatoire choisi avant le calcul du cryptogramme c.

3. Procédé de chiffrement selon la revendication 1, au cours duquel on calcule le cryptogramme $c = g^m r^n \bmod(n^2)$, r étant un nombre entier aléatoire choisi avant le calcul du cryptogramme c.

4. Procédé de chiffrement selon la revendication 1, au cours duquel, pour chiffrer le nombre m, avec $0 \le m < n^2$, on calcule le cryptogramme c selon les étapes suivantes :

$$1.\ m_1 = m \bmod n$$

$$2.\ m_2 = (m - m1)/n$$

$$3.\ c = g^{m1}\ m_2{}^n \bmod n^2.$$

5. Procédé de déchiffrement pour déchiffrer un cryptogramme c obtenu par un procédé de chiffrement selon l'une des revendications 1 à 3 et produire un nombre m associé, **caractérisé en ce que** on calcule le nombre m :

$$m = \log_n(c^{\lambda(n)} \bmod n^2).\log_n(g^{\lambda(n)} \bmod n^2)^{-1} \bmod n,$$

avec $\log_n(x) - (x-1)/n$ pour x un entier quelconque et $\lambda(n)$ un plus petit commun multiple des nombres p-1 et q-1, n et g étant des paramètres d'une clé publique K, et p et q étant des paramètres d'une clé privée K' associée.

6. Procédé de déchiffrement selon la revendication 5, au cours duquel on précalcule et on mémorise la quantité:

$$\alpha_{n,g} = \log_n(g^{\lambda(n)} \bmod n^2)^{-1} \bmod n.$$

7. Procédé de déchiffrement selon la revendication 5, au cours duquel le calcul de m est décomposé selon les étapes suivantes, utilisant le Théorème du Reste Chinois TRC :

$$m_p = \log_p(c^{p-1} \bmod p^2).\log_p(g^{p-1} \bmod p^2)^{-1} \bmod p.$$

$$m_q = \log_q(c^{q-1} \bmod q^2).\log_q(g^{q-1} \bmod q^2)^{-1} \bmod q.$$

$$m = TRC(m_p, m_q, p, q)\ ,\ avec\ \log_p(x) = (x-1)/p$$

et avec $\log_q(x) = (x-1)/q$ pour x un entier quelconque.

8. Procédé de déchiffrement selon la revendication 7, au cours duquel on précalcule et on mémorise les quantités suivantes

$$\alpha_{p,g} = \log_p(g^{p-1} \bmod p^2)^{-1} \bmod p$$

et

$$\alpha_{q,g} = \log_q(g^{q-1} \bmod q^2)^{-1} \bmod q.$$

9. Procédé de déchiffrement pour déchiffrer un cryptogramme c obtenu par un procédé de chiffrement selon la revendication 4 et produire un nombre m associé, **caractérisé en ce qu'**on calcule le nombre m selon les étapes suivantes:

$$1.\ m_1 = \log_n(c^{\lambda(n)} \bmod n^2).\log_n(g^{\lambda(n)} \bmod n^2)^{-1} \bmod n.$$

2. $w = cg^{-m1} \bmod n$.

3. $m_2 = w^{1/n \bmod \lambda(n)} \bmod n$.

4. $m = m_1 + nm_2$.

avec $\log_n(x) - (x\,1)/n$ pour x un entier quelconque et $\lambda(n)$ le plus petit commun multiple des nombres p-1 et q-1, n et g étant des paramètres d'une clé publique K, et p et q étant des paramètres d'une clé privée K' associée.

**10.** Procédé de déchiffrement selon la revendication 9, au cours duquel on précalcule et on mémorise les quantités suivantes :

$$\alpha_{n,g} = \log_n(g^{\lambda(n)} \bmod n^2)^{-1} \bmod n$$

et

$$\gamma_n - 1/n \bmod \lambda(n).$$

**11.** Procédé de déchiffrement selon la revendication 9, au cours duquel le calcul de m est décomposé selon les étapes suivantes, en utilisant le Théorème du Reste Chinois :

1. $m_{1,p} = \log_p(c^{p-1} \bmod p^2) \cdot \log_n(g^{p-1} \bmod p^2)^{-1} \bmod p$

2. $w_p = cg^{-m1 \cdot p} \bmod p$

3. $m_{2,p} = w_p^{1/q \bmod p-1} \bmod p$.

4. $m_{1,q} = \log_q(c^{q-1} \bmod q^2) \cdot \log_q(g^{q-1} \bmod q^2)^{-1} \bmod q$

5. $w_q = cg^{-m1 \cdot q} \bmod q$

6. $m_{2,q} = w_q^{1/p \bmod q-1} \bmod q$

7. $m_1 = TRC(m_{1,p}, m_{2,p}, p, q)$.

8. $m2 = TRC(m_{1,q}, m_{2,q}, p, q)$.

9. $m = m_1 + pqm_2$, avec $\log_p(x) = (x-1)/p$

et avec $\log_q(x) = (x-1)/q$ pour x un nombre entier quelconque.

**12.** Procédé de déchiffrement selon la revendication 11, au cours duquel on précalcule et on mémorise les quantités suivantes :

$$\alpha_{p,g} = \log_p(g^{p-1} \bmod p^2)^{-1} \bmod p$$

$$\alpha_{q,g} = \log_q(g^{q-1} \bmod q^2)^{-1} \bmod q$$

$$\gamma_p = 1/q \bmod p-1$$

$$\gamma_q = 1/p \bmod q-1.$$

**13.** Procédé de déchiffrement pour déchiffrer un cryptogramme reçu c obtenu par un procédé de chiffrement selon l'une des revendications 1 à 3 et produire un nombre in associé, **caractérisé en ce qu'**on calcule le nombre m :

$$m = \log_n(c^u \bmod n^2).\log_n(g^u \bmod n^2)^{-1} \bmod n.$$

avec $\log_n(x) = (x-1)/n$ pour x un entier quelconque, n et g étant des paramètres d'une clé publique K, et p, q, u étant des paramètres d'une clé privée K' associée.

**14.** Procédé de déchiffrement selon la revendication 13, au cours duquel on précalcule et on mémorise la quantité :

$$\beta_{n,g} = \log_n(g^u \bmod n^2)^{-1} \bmod n.$$

**15.** Procédé de déchiffrement selon la revendication 13, au cours duquel le calcul de m est décomposé selon les étapes suivantes, en utilisant le Théorème du reste chinois

$$1.\ m_p = \log_p(c^u \bmod p^2).\log_p(g^u \bmod p^2)^{-1} \bmod p.$$

$$2.\ m_q = \log_q(c^u \bmod q^2).\log_q(g^u \bmod q^2)^{-1} \bmod q.$$

$$3.\ m = TRC(m_p, m_q, p, q),\ \text{avec}\ \log_p(x) = (x-1)/p$$

et avec $\log_q(x) = (x-1)/q$ pour x un entier quelconque.

**16.** Procédé de déchiffrement selon la revendication 15, au cours duquel on précalcule et on mémorise les quantités suivantes :

$$\beta_{p,g} = \log_n(g^u \bmod p^2)^{-1} \bmod p$$

$$\beta_{q,g} = \log_n(g^u \bmod q^2)^{-1} \bmod q$$

**17.** Procédé de génération de clés publique K et privée K', susceptible d'être utilisé pour la mise en oeuvre d'un procédé de chiffrement selon l'une des revendications 1 à 4 ou d'un procédé de déchiffrement selon l'une des revendications 5 à 16, la clé privée devant être conservée de façon secrète et la clé publique devant être diffusée publiquement, le procédé de génération de clé étant **caractérisé en ce qu'**il comprend les étapes suivantes :

- sélectionner deux nombres premiers p et q distincts, de taille voisine;
- calculer un nombre n égal au produit p.q;
- vérifier qu'un nombre g = 2, $0 \leq g < n^2$ vérifie les deux conditions suivantes:

    a) g est inversible modulo $n^2$ et
    b) ord(g,$n^2$) = 1 mod n,

la clé publique K étant fermée par les paramètres n et g et la clé privée K' étant formée par les paramètres p et q.

18. Procédé de génération de clé selon la revendication 17, comprenant également l'étape suivante :

- calculer un plus petit commun multiple des nombres (p-1) et (q-1) : $\lambda(n)$=PPCM(p-1, q-1)

la clé privée K' étant alors formée par les paramètres p, q et $\lambda(n)$.

19. Procédé de génération de clé selon la revendication 18, comprenant également les étapes suivantes :

- sélectionner un nombre entier u tel que u divise p et u divise q,
- calculer un nombre g' = $g^{\lambda(n)/u}$ mod $n^2$,

la clé publique K étant alors formée par les paramètres n et g', et la clé privée K' étant formée par les paramètres p, q et u,

20. Procédé de signature, pour calculer une signature s d'un message m, **caractérisé en ce qu'**il comprend une étape consistant à exécuter le procédé de déchiffrement selon l'une des revendications 9 à 12 en remplaçant le cryptogramme c par le message m dans le procédé de déchiffrement, le nombre associé produit étant la signature s.

21. Procédé de vérification de signature, pour vérifier une signature s d'un nombre m représentatif d'un message, **caractérisé en ce qu'**il comprend les étapes suivantes :

produire une quantité v en exécutant le procédé de chiffrement selon la revendication 4 en remplaçant le nombre m par la signature s dans le procédé de chiffrement,
vérifier que la quantité v est égale au nombre m.

22. Système de communication cryptographique à clés publique et privée obtenues par un procédé de génération de clés selon l'une des revendications 17 à 19, comprenant un canal de communication (20) et des dispositifs communiquant (A, B), chaque dispositif communiquant comprenant au moins une interface de communication (11), des moyens de traitement de données (10) et des moyens de mémorisation (12, 13), **caractérisé en ce que** :

- un premier dispositif (A) comprend des moyens pour calculer un cryptogramme c=$g^m$mod $n^2$ d'un nombre m représentatif d'un message, n et g étant des paramètres d'une clé publique d'un deuxième dispositif (B), et des moyens pour transmettre le cryptogramme c sur le canal de communication vers le deuxième dispositif,
- le deuxième dispositif (B) comprend des moyens pour déchiffrer le cryptogramme c à l'aide d'une clé privée associée à la clé publique et produire le nombre m à partir du cryptogramme c.

23. Système selon la revendication 22, , dans lequel le premier dispositif comprend également une mémoire programme comprenant une zone sécurisée pour mémoriser et conserver secrètement des résultats de précalcul.

24. Système selon l'une des revendications 22 à 23, comprenant également un générateur (15) pour produire un nombre aléatoire r avant le calcul d'un cryptogramme c.

**Claims**

1. Encryption method of encrypting a number m representing a message, where $0 \leq m < n$, **characterised in that** a cryptogram $c = g^m \bmod n^2$ is computed, n and g being parameters of a public key.

2. Encryption method according to claim 1, during which the cryptogram $c = g^{m+nr} \bmod (n^2)$ is computed, r being a random integer chosen prior to computing the cryptogram c.

3. Encryption method according to claim 1, during which the cryptogram $c = g^m r^n \bmod (n^2)$ is computed, r being a random integer chosen prior to computing the cryptogram c.

4. Encryption method according to claim 1, during which, in order to encrypt the number m, where $0 \leq m < n^2$, the cryptogram c is computed according to the following steps:

$$1. \; m_1 = m \bmod n$$

$$2. \; m_2 = (m-m1)/n$$

$$3. \; c = g^{m1} m_2{}^n \bmod n^2.$$

5. Decryption method of decrypting a cryptogram c obtained by an encryption method according to one of the claims from 1 to 3 and of producing an associated number m, **characterised in that** the number m is computed:

$$m = \log_n(c^{\lambda(n)} \bmod n^2) . \log_n(g^{\lambda(n)} \bmod n^2)^{-1} \bmod n$$

with $\log_n(x) - (x-1)/n$ for any integer whatsoever and $\lambda(n)$ a least common multiple of the numbers p-1 and q-1, n and g being parameters of a public key K, and p and q being parameters of an associated private key K'.

6. Decryption method according to claim 5, during which the following quantity is pre-computed and stored:

$$\alpha_{n,g} = \log_n(g^{\lambda(n)} \bmod n^2)^{-1} \bmod n.$$

7. Decryption method according to claim 5, during which the calculation of m is broken down into the following steps, using the Chinese Remainder Theorem CRT:

$$m_p = \log_p(c^{p-1} \bmod p^2) \; \log_p(g^{p-1} \bmod p^2)^{-1} \bmod p$$

$$m_q = \log_q(c^{q-1} \bmod q^2) \; \log_p(g^{q-1} \bmod q^2)^{-1} \bmod q$$

$$m = CRT(m_p, m_q, p, q), \; \text{with} \; \log_p(x) = (x-1)/p$$

and with $\log_q(x) = (x-1)/q$ where x is any integer whatsoever.

8. Decryption method according to claim 7, during which the following quantities are pre-computed and stored:

$$\alpha_{p,g} = \log_p(g^{p-1} \bmod p^2)^{-1} \bmod p$$

and

$$\alpha_{q,g} = \log_q(g^{q-1} \bmod q^2)^{-1} \bmod q.$$

9. Decryption method of decrypting a cryptogram c obtained by an encryption method according to claim 4 and of producing an associated number m, **characterised in that** the number m is computed according to the following steps:

$$1. \quad m_1 = \log_n(c^{\lambda(n)} \bmod n^2).\log_n(g^{\lambda(n)} \bmod n^2)^{-1} \bmod n$$

$$2. \quad w = cg^{-m1} \bmod n$$

$$3. \quad m_2 = w^{1/n \bmod \lambda(n)} \bmod n$$

$$4. \quad m = m_1 + nm_2$$

with $\log_n(x) = (x-1)/n$ where x is any integer whatsoever and $\lambda(n)$ the least common multiple of the numbers p-1 and q-1, n and g being parameters of a public key K, and p and q being parameters of an associated private key K'.

10. Decryption method according to claim 9, during which the following quantities are pre-computed and stored:

$$\alpha_{n,g} = \log_n(g^{\lambda(n)} \bmod n^2)^{-1} \bmod n$$

and

$$\gamma_n = 1/n \bmod \lambda(n)$$

11. Decryption method according to claim 9, during which the calculation of m is broken down into the following steps, using the Chinese Remainder Theorem:

$$1. \quad m_{1,p} = \log_p(c^{p-1} \bmod p^2) \ \log_p(g^{p-1} \bmod p^2)^{-1} \bmod p$$

$$2. \quad w_p = cg^{-m1,p} \bmod p$$

$$3. \quad m_{2,p} = w_p^{1/q \bmod p-1} \bmod p$$

$$4. \quad m_{1,q} = \log_q(c^{q-1} \bmod q^2) \ \log_q(g^{q-1} \bmod q^2)^{-1} \bmod q$$

$$5. \quad w_q = cg^{-m1,q} \bmod q$$

$$6. \quad m_{2,q} = w_q^{1/p \bmod q-1} \bmod q$$

$$7.\ m_1\ =\ CRT(m_{1,p}, m_{2,p}, p, q)$$

$$8.\ m_2\ =\ CRT(m_{1,q}, m_{2,q}, p, q)$$

$$9.\ m\ =\ m_1\ +\ pqm_2\ with\ \log_p(x)\ =\ (x-1)/p$$

and with $\log_q(x) = (x-1)/q$ where x is any integer whatsoever.

**12.** Decryption method according to claim 11, during which the following quantities are pre-computed and stored:

$$\alpha_{p,g}\ =\ \log_p(g^{p-1}\ mod\ p^2)^{-1}\ mod\ p$$

$$\alpha_{q,g}\ =\ \log_q(g^{q-1}\ mod\ q^2)^{-1}\ mod\ q$$

$$\gamma_p\ =\ 1/q\ mod\ p-q$$

$$\gamma_q\ =\ 1/p\ mod\ q-1$$

**13.** Decryption method of decrypting a received cryptogram c obtained by an encryption method according to one of the claims from 1 to 3 and of producing an associated number m, **characterised in that** the number m is computed:

$$m\ =\ \log_n(c^u\ mod\ n^2).\log_n(g^u\ mod\ n^2)^{-1}\ mod\ n$$

with $\log_n(x) - (x-1)/n$ where x is any integer whatsoever, n and g being parameters of a public key K, and p and q being parameters of an associated private key K'.

**14.** Decryption method according to claim 13, during which the following quantity is pre-computed and stored:

$$\beta_{n,g}\ =\ \log_n(g^u\ mod\ n^2)^{-1}\ mod\ n$$

**15.** Decryption method according to claim 13, during which the calculation of m is broken down into the following steps, by using the Chinese Remainder Theorem:

$$1.\ m_p\ =\ \log_p(c^u\ mod\ p^2)\ \log_p(g^u\ mod\ p^2)^{-1}\ mod\ p$$

$$2.\ m_q\ =\ \log_q(c^u\ mod\ q^2)\ \log_p(g^u\ mod\ q^2)^{-1}\ mod\ q$$

$$3.\ m\ =\ CRT(m_p, m_q, p, q)\ with\ \log_p(x)\ =\ (x-1)/p$$

and with $\log_q(x) = (x-1)/q$ where x is any integer whatsoever.

16. Decryption method according to claim 15, during which the following quantities are pre-computed and stored:

$$\beta_{p,g} = \log_p(g^u \bmod p^2)^{-1} \bmod p$$

$$\beta_{q,g} = \log_q(g^u \bmod q^2)^{-1} \bmod q$$

17. Method of generating public K and private K' keys, which can be used for implementing an encryption method according to one of the claims from 1 to 4 or a decryption method according to one of the claims from 5 to 16, wherein the private key must be kept secret and the public key must be published, the key-generation method being **characterised in that** it comprises the following steps:

  - selecting two large primes p and q, which are distinct and of similar sizes;
  - computing a number n that is equal to the product of p.q;
  - verifying that a number g = 2, $0 \le g < n^2$ satisfies the following two conditions:

    a) g is reversible modulo n2 and
    b) ord $(g, n^2) = 1 \bmod n$,

  the public key K being formed by the parameters n and g and the private key K' being formed by the parameters p and q.

18. Key-generation method according to claim 17, also comprising the following step:

  - computing the least common multiple of the numbers (p-1) and (q-1) : $\lambda(n) = LCM(p-1, q-1)$
  the private key K' then being formed by the parameters p, q and $\lambda(n)$.

19. Key-generation method according to claim 18, also comprising the following steps:

  - selecting an integer u such that u divides p and u divides q,
  - computing a number $g' = g^{\lambda(n)/u} \bmod n^2$,
  the public key K then being formed by the parameters n and g', and the private key K' being formed by the parameters p, q and u.

20. Signing method, for computing a signature s of a message m, **characterised in that** it comprises a step consisting of executing the decryption method according to one of the claims from 9 to 12, replacing the cryptogram c with the message m in the decryption method, the produced associated number being the signature s.

21. Signature verification method, for verifying a signature s of a number m representing a message, **characterised in that** it comprises the following steps:

  producing a quantity v by executing the encryption method according to claim 4, replacing the number m with the signature s in the encryption method,
  verifying that the quantity v is equal to the number m.

22. Cryptographic communication method with public and private keys obtained by a key-generation method according to one of the claims from 17 to 19, comprising a communication channel (20) and communicating devices (A, B), each communicating device comprising at least one communication interface (11), data processing means (10) and storage means (12, 13),
**characterised in that**:

  - a first device (A) comprises means for computing a cryptogram $c = g^m \bmod n^2$ of a number m representing a message, n and g being parameters of a public key of a second device (B) and means for transmitting the cryptogram c over the communication channel towards the second device,
- the second device (B) comprises means for decrypting the cryptogram c with the help of a private key associated with the public key and for producing the number m from the cryptogram c.

**23.** System according to claim 22, wherein the first device also comprises program memory comprising a secure area for storing pre-calculation results and keeping them secret.

**24.** System according to one of the claims from 22 to 23, also comprising a generator (15) for producing a random number r prior to computing a cryptogram c.


**Patentansprüche**

**1.** Chiffrierungsverfahren zum Chiffrieren einer eine Meldung darstellenden Zahl m mit $0 \leq m < n$, **dadurch gekennzeichnet, dass** ein Kryptogramm $c = g^m \bmod n^2$ berechnet wird, wobei n und g Parameter eines öffentlichen Schlüssels sind.

**2.** Chiffrierungsverfahren gemäß Anspruch 1, in dessen Verlauf das Kryptogramm $c = g^{m+nr} \bmod(n^2)$ berechnet wird, wobei r eine vor der Berechnung des Kryptogramms c ausgewählte zufällige ganze Zahl ist.

**3.** Chiffrierungsverfahren gemäß Anspruch 1, in dessen Verlauf das Kryptogramm $c = g^m r^n \bmod(n^2)$ berechnet wird, wobei r eine vor der Berechnung des Kryptogramms c ausgewählte zufällige ganze Zahl ist.

**4.** Chiffrierungsverfahren gemäß Anspruch 1, in dessen Verlauf zur Chiffrierung der Zahl m mit $0 \leq m < n^2$ das Kryptogramm c gemäß den folgenden Stufen berechnet wird:

$$1.\ \ \texttt{m1 = m mod n}$$

$$2.\ \ \texttt{m2 = (m - m1)/n}$$

$$3.\ \ c = g^{m1}\ m2^n\ \bmod\ n^2.$$

**5.** Dechiffrierungsverfahren zum Dechiffrieren eines durch ein Chiffrierungsverfahren gemäß Anspruch 1 bis 3 erhaltenen Kryptogramms c und zum Produzieren einer zugeordneten Zahl m, **dadurch gekennzeichnet, dass** die Zahl m folgendermaßen berechnet wird:

$$m = \log_n\ (c^{\lambda(n)}\ \bmod\ n^2)\ \log_n\ (g^{\lambda(n)}\ \bmod\ n^2)^{-1}\ \bmod\ n,$$

wobei $\log_n (x) - (x-1) / n$ mit x eine beliebige ganze Zahl ist und $\lambda(n)$ ein kleineres gemeinsames Vielfaches der Zahlen p-1 und q-1 1, wobei n und g Parameter eines öffentlichen Schlüssels K und p und q Parameter eines zugeordneten privaten Schlüssels K' sind.

**6.** Dechiffrierungsverfahren gemäß Anspruch 5, in dessen Verlauf die folgende Menge vorberechnet und gespeichert wird:

$$\alpha_{n,\ g} = \log_n\ (g^{\lambda(n)}\ \bmod\ n^2)^{-1}\ \bmod\ n.$$

**7.** Dechiffrierungsverfahren gemäß Anspruch 5, in dessen Verlauf die Berechnung von m unter Heranziehung des chinesischen Restsatzes TRC gemäß den folgenden Stufen aufgebaut ist:

$$m_p = \log_p (c^{p-1} \bmod p^2) . \log_n (g^{p-1} \bmod p^2)^{-1} \bmod p.$$

$$m_p = \log_q (c^{q-1} \bmod q^2) . \log_q (g^{q-1} \bmod q^2)^{-1} \bmod q.$$

$$m = TRC (m_p, m_q, p, q), \text{ wobei } \log_p (x) = (x-1)/p$$

und wobei $\log_q(x) = (x-1)/q$, wobei x eine beliebige ganze Zahl ist.

8. Dechiffrierungsverfahren gemäß Anspruch 7, in dessen Verlauf die folgenden Stufen vorberechnet und gespeichert werden:

$$\alpha_{p,g} = \log_p (g^{p-1} \bmod p^2)^{-1} \bmod p$$

und

$$\alpha_{q,g} = \log_q (g^{q-1} \bmod q^2)^{-1} \bmod q$$

9. Dechiffrierungsverfahren zum Dechiffrieren eines durch ein Chiffrierungsverfahren gemäß Anspruch 4 erhaltenen Kryptogramms c und zum Produzieren einer zugeordneten Zahl m, **dadurch gekennzeichnet, dass** die Zahl m gemäß den folgenden Stufen berechnet wird:

$$1. \quad m1 = \log_n (c^{\lambda(n)} \bmod n^2) . \log_n (g^{\lambda(n)} \bmod n^2)^{-1} \bmod n.$$

$$2. \quad w = cg^{-m1} \bmod n.$$

$$3. \quad m3 = w^{1/n \bmod \lambda(n)} \bmod n.$$

$$4. \quad m = m1 + nm2,$$

wobei $\log_n (x) - (x\ 1)/n$, wobei x eine beliebige ganze Zahl ist und $\lambda(n)$ das kleinste gemeinsame Vielfache der Zahlen p-1 und q-1 ist, wobei n und g Parameter eines öffentlichen Schlüssels K sind und p und q Parameter eines zugeordneten privaten Schlüssels K'.

10. Dechiffrierungsverfahren gemäß Anspruch 9, in dessen Verlauf die folgenden Mengen vorberechnet und gespeichert werden:

$$\alpha_{n,\ g} = \log_n \left(g^{\lambda(n)} \bmod n^2\right)^{-1} \bmod n$$

und

$$\gamma n \ \_\ I/n \bmod \lambda(n).$$

**11.** Dechiffrierungsverfahren gemäß Anspruch 9, in dessen Verlauf sich die Berechnung von m unter Heranziehung des chinesischen Restsatzes gemäß den folgenden Stufen zusammensetzt:

$$1.\ m_{1,\ p} = \log_p \left(c^{p-1} \bmod p^2\right) . \ \log_p \left(g^{p-1} \bmod p^2\right)^{-1} \bmod p$$

$$2.\ W_p = cg^{-m1 \cdot p} \bmod p$$

$$3.\ m_{2,p} = w_p^{\,1/q \bmod p.1} \bmod p$$

$$4.\ m_{1,\ q} = \log_q \left(c^{q-1} \bmod q^2\right) . \ \log_q \left(g^{q-1} \bmod q^2\right)^{-1} \bmod q$$

$$5.\ Wq = cg^{-m1}, q \bmod q$$

$$6.\ m_{2,\ q} = wq^{\,1/q \bmod q-1} \bmod q$$

$$7.\ m1 = TRC \left(m_{1,\ p},\ m_{2,\ p},\ p,\ q\right)$$

$$8.\ m2 = TRC \left(m_{1,\ q},\ m_{2,\ q},\ p,\ q\right)$$

$$9.\ m = m1 + pqm_2,\ \text{wobei}\ \log_p (x) = (x-1)/p$$

und wobei $\log_q (x) = (x-1)/q$, wobei x eine beliebige ganze Zahl ist.

**12.** Dechiffrierungsverfahren gemäß Anspruch 11, in dessen Verlauf die folgenden Mengen vorberechnet und gespeichert werden:

$$\alpha_{p,\ g} = \log_p \left(g^{p-1} \bmod p^2\right)^{-1} \bmod p$$

$$\alpha_{p,\ g} = \log_q \left(g^{q-1} \bmod q^2\right)^{-1} \bmod q$$

$$\gamma_p = 1/q \bmod p-1$$

$$\gamma_q = 1/p \mod q-1$$

**13.** Dechiffrierungsverfahren zum Dechiffrieren eines durch ein Chiffrierungsverfahren gemäß Anspruch 1 bis 3 erhaltenen Kryptogramms c und zum Produzieren einer zugeordneten Zahl m, **dadurch gekennzeichnet, dass** die Zahl m folgendermaßen berechnet wird:

$$m = \log_n (c^u \mod n^2) . \log_n (g^u \mod n^2)^{-1} \mod n,$$

wobei $\log_n (x) = (x-1)/n$ ist, wobei x eine beliebige ganze Zahl ist, n und g Parameter eines öffentlichen Schlüssels K und p, q, u Parameter eines zugeordneten privaten Schlüssels K'.

**14.** Dechiffrierungsverfahren gemäß Anspruch 13, in dessen Verlauf die folgende Menge vorberechnet und gespeichert wird:

$$\beta_{n, g} = \log_n (g^u \mod n^2)^{-1} \mod n.$$

**15.** Dechiffrierungsverfahren gemäß Anspruch 13, in dessen Verlauf die Berechnung von m unter Heranziehung des chinesischen Restsatzes sich gemäß den folgenden Stufen zusammensetzt:

$$1. \ m_p = \log_p (c^u \mod p^2) . \log_p (g^u \mod p^2)^{-1} \mod p.$$

$$2. \ m_q = \log_q (c^u \mod p^2) . \log_q (g^u \mod p^2)^{-1} \mod q.$$

$$3. \ m = TRC (m_p, {}^m_q, p, q), \ wobei \ \log_p (x) = (x-1)/p$$

und mit $\log_q (x) = (x-1)/q$, wobei x eine beliebige ganze Zahl ist.

**16.** Dechiffrierungsverfahren gemäß Anspruch 15, in dessen Verlauf die folgenden Mengen vorberechnet und gespeichert werden:

$$\beta_{p, g} = \log_n (g^u \mod p^2)^{-1} \mod p$$

$$\beta_{q, g} = \log_n (g^u \mod p^2)^{-1} \mod q$$

**17.** Erzeugungsverfahren von öffentlichen Schlüsseln K und privaten Schlüsseln K', das zur Verwendung für die Umsetzung eines Chiffrierungsverfahrens gemäß Anspruch 1 bis 4 oder eines Dechiffrierungsverfahrens gemäß Anspruch 5 bis 16 herangezogen werden kann, wobei der private Schlüssel geheim gehalten werden muss und der öffentliche Schlüssel öffentlich bekannt gegeben werden muss, wobei das Schlüsselerzeugungsverfahren **dadurch gekennzeichnet ist, dass** es die folgenden Stufen umfasst:

- Auswahl von zwei unterschiedlichen Primzahlen p und q in ähnlicher Größe;
- Berechnung einer Zahl n gleich dem Produkt p.q;
- Überprüfung, dass eine Zahl g = 2, $0 \leq g < n^2$ die beiden folgenden Bedingungen überprüft:

    a) g ist umkehrbar modulo $n^2$ und

b) ord $(g, n^2) = 1 \bmod n$,

g ist umkehrbar modulo $n^2$ und
wobei der öffentliche Schlüssel K durch die Parameter n und g gebildet wird und der private Schlüssel K' durch die Parameter p und q gebildet wird.

**18.** Schlüsselerzeugungsverfahren gemäß Anspruch 17, das ebenfalls die folgenden Stufen umfasst:

- Berechnung eines kleinsten gemeinsamen Vielfachen der Zahlen (p-1) und (q-1) : $\lambda (n) = $ PPCM (p-1, q-1)

wobei der private Schlüssel K' dann durch die Parameter p, q und $\lambda(n)$ gebildet wird.

**19.** Schlüsselerzeugungsverfahren gemäß Anspruch 18, das ebenfalls die folgenden Stufen umfasst:

- Auswahl einer ganzen Zahl u, so dass u p dividiert und u q dividiert,
- Berechnung einer Zahl $g' = g^{\lambda(n)/u} \bmod n^2$,

wobei der öffentliche Schlüssel K dann durch die Parameter n und g' gebildet wird und der private Schlüssel K' durch die Parameter p q und u gebildet wird.

**20.** Unterschriftsverfahren zur Berechnung einer Unterschrift s einer Meldung m, **dadurch gekennzeichnet, dass** es eine aus der Ausführung des Dechiffrierungsverfahrens gemäß Anspruch 9 bis 12 bestehende Stufe durch den Austausch des Kryptogramms c durch die Meldung m im Dechiffrierungsverfahren umfasst, wobei die produzierte zugehörige Zahl der Unterschrift s zugeordnet wird.

**21.** Überprüfungsverfahren der Unterschrift zur Überprüfung einer Unterschrift s einer eine Meldung darstellenden Zahl m, **dadurch gekennzeichnet, dass** es die folgenden Stufen umfasst:

Produzieren einer Menge v durch Ausführen des Chiffrierungsverfahrens gemäß Anspruch 4 durch Austausch der Zahl m durch die Unterschrift s im Chiffrierungsverfahren,
Überprüfung, dass die Menge v gleich der Zahl m ist.

**22.** Kryptographisches Kommunikationssystem mit öffentlichem und privatem Schlüssel, die durch ein Schlüsselerzeugungsverfahren gemäß Anspruch 17 bis 19 erhalten wurden, mit einem Kommunikationskanal (20) und kommunizierenden Vorrichtungen (A, B), wobei jede kommunizierende Vorrichtung wenigstens eine Kommunikationsschnittstelle (11) der Datenverarbeitungsmittel (10) und der Speichermittel (12, 13) umfasst, **dadurch gekennzeichnet, dass**:

- eine erste Vorrichtung (A) Mittel zur Berechnung eines Kryptogramms $c = g^m \bmod n^2$ einer eine Meldung darstellenden Zahl m umfasst, wobei n und g Parameter eines öffentlichen Schlüssels einer zweiten Vorrichtung (B) und der Mittel zur Übertragung des Kryptogramms c auf den Kommunikationskanal auf die zweite Vorrichtung sind,
- die zweite Vorrichtung (B) Mittel zur Dechiffrierung des Kryptogramms c mithilfe eines dem öffentlichen Schlüssel zugeordneten privaten Schlüssels und zur Produktion der Zahl m ausgehend vom Kryptogramm c umfasst.

**23.** System gemäß Anspruch 22, in dem die erste Vorrichtung ebenfalls einen Programmspeicher mit einem gesicherten Bereich zum Speichern und geheimen Aufbewahren der Ergebnisse der Vorberechnung umfasst.

**24.** System gemäß Anspruch 22 bis 23, das ebenfalls einen Generator (15) zur Produktion einer zufälligen Zahl r vor der Berechnung eines Kryptogramms c umfasst.

$C_B$

$C_A$

$C_A = E_{KB} (m_A)$

CHIFFREMENT

$C_B = E_{KA} (m_B)$

CHIFFREMENT

$K_B$

$K'_A$

$m_B = D_{K'_A} (C_B)$

DECHIFFREMENT

$m_A = D_{K'_B} (C_A)$

DECHIFFREMENT

A

B

## FIG.1

EP 1 151 576 B1

Canal de communication 20

11 Interface de communication

CPU
10

R

12 Mémoire Programme

120 Zone sécurisée

15

13 Mémoire de travail

14 Générateur aléatoire

A

FIG.2

EP 1 151 576 B1

CHIFFREMENT

DISPOSITIF A

$K_B = (n_B, g_B)$
$n = n_B$
$g = g_B$

$0 \leqslant m < n$
$C = E_{K_B}$

DECHIFFREMENT

DISPOSITIF B

$K'_B = (p_B, q_B)$
$p = p_B$ , $q = q_B$
$K_B = (n_B, g_B)$
$n = n_B$ , $g = g_B$
$\lambda(n) = PPCM(p-1, q-1)$

$m = D_{K'_B}(C)$

**FIG.3**

EP 1 151 576 B1

DISPOSITIF A

vérification
de signature

$K_B = (n_B, g_B)$

$n = n_B, \; g = g_B$

$0 \leqslant s < n^2$

$v = E_{K_B}(s) = g^{s1} s2^n \bmod n^2$

$v \overset{?}{=} m$

DISPOSITIF B

génération de
signature

$K'_B = (p_B, q_B)$

$p = p_B, \; q = q_B$

$K_B = (n_B, g_B)$

$n = n_B, \; g = g_B$

$0 \leqslant m < n^2$

$s = D_{K'_B}(m)$

## FIG.4